# EUROPEAN PATENT APPLICATION

(11) **EP 4 477 517 A1**
(43) Date of publication of application: **18.12.2024**
(21) Application number: 23178824.1
(22) Date of filing: 13.06.2023
(51) Int. Cl.: B62K 27/00, B62J 17/10, B62J 50/30, B62K 27/16, B60H 1/26

(54) **AIR SUPPLY ARRANGEMENT FOR A BIKE TRAILER**

(71) Applicant: Thule Sweden AB, 335 04 Hillerstorp (SE)
(72) Inventor: THULIN, Carl, 56432 Bankeryd (SE); LEARNED, Wilfred, Värnamo (SE); KARLSSON, Patrik, Värnamo (SE)
(74) Representative: Wallentin, Lars

(57) **Abstract**

Disclosed is an air supply arrangement for a bike trailer. The air supply arrangement is configured to be provided outside of a boundary defining a compartment of the bike trailer and comprises a supporting portion for supporting an air supply device configured to pressurize intake air, and a coupling arrangement for attaching the supporting portion on an outside of the bike trailer.

## Description

### FIELD

The present invention relates to an air supply arrangement for a bike trailer as well as to a bike trailer configured for use with an air supply arrangement.

### BACKGROUND

Bike trailers are known in the art. Such bike trailers can be used for transporting passengers such as children. The bike trailers typically comprise a cover surrounding the passenger compartment. Different configurations of such a cover are available including configurations in which at least a front part of the cover is provided with a fly screen or mesh or in which portions of the cover comprise waterproof or repellent sections.

There are also rain covers that protect the passenger compartment against rain. When the cover is provided around the passenger compartment, air ventilation to the interior of the passenger compartment is deteriorated.

### SUMMARY

It is an object of the invention to provide an air supply arrangement for a bike trailer providing improved air ventilation for a passenger compartment of a bike trailer.

The object is solved by an air supply arrangement according to claim 1. Advantageous further formations are subject of the dependent claims.

According to an aspect, an air supply arrangement for a bike trailer is provided. The air supply arrangement is configured to be provided outside of a boundary defining a compartment of the bike trailer and comprises a supporting portion for supporting an air supply device configured to pressurize intake air and comprises a coupling arrangement for attaching the supporting portion on an outside of the bike trailer. Since the air supply arrangement is configured to be attached to an outside of the bike trailer, it is possible to retrofit existing bike trailers simply by attaching the air supply arrangement to the outside. The air supply arrangement may be configured such that it is fully provided outside of the bike trailer. In particular, the air supply arrangement can be configured as a completely separate unit which does not need to be integrated into the bike trailer and therefore allows to easily retrofit a bike trailer with the system. The air supply arrangement can be configured such that all components of the same are positioned on the outside of the bike trailer when the air supply arrangement is mounted on the bike trailer.

In some embodiments, the coupling arrangement comprises a fixation portion configured to attach to a frame assembly of the bike trailer. For example, the frame assembly of the bike trailer may comprise a cross member. The coupling arrangement can be configured to be attached to the cross member. The cross member is a member which extends in cross direction of the bike trailer. In another example, the coupling arrangement can be configured to be attached to lateral side portions of the frame assembly. The fixation portion may comprise a claw-like structure. The fixation portion may comprise a recess for receiving a portion of the frame assembly, for example a portion of the cross member. The coupling arrangement may in some embodiments comprise two fixation portions.

The frame assembly may comprise a roof portion. The roof portion may be defined by at least two lateral frame members and one or two cross members connecting the lateral frame members. A fabric portion may be attached to the roof portion. The lateral frame members may extend in longitudinal direction of the bike trailer and the cross members may extend perpendicular to the lateral frame members. In some embodiments, the roof portion of the frame assembly may be formed substantially rectangular when viewed from above. The fabric portion may cover the entire roof portion. The lateral frame members may be formed straight or curved. The cross members may be formed straight. A handle may be coupled to an end portion of the lateral frame members and/or may be coupled to end portions of the cross member on which the air supply arrangement may be mountable.

The coupling arrangement may be configured such that the air supply arrangement is held on a frame member on only one side. The coupling arrangement may be configured such that the air supply arrangement can be held on a frame member, for example a cross member, in a cantilevered manner. The coupling arrangement may be configured such that a mounted air supply arrangement extends from the cross member in only one direction, for example in a forward direction of the bike trailer. The coupling arrangement may be configured such that the main weight of the air supply arrangement rests on one or more of the frame members of the frame assembly and that only a small weight force is applied on a fabric portion spanned in or extending in the roof portion of the frame assembly. In some configurations, supporting the air supply arrangement on the fabric portion serves to provide a sealed connection between the air guiding portion and the fabric such that a sufficiently high pressure may be generated in the air guiding portion and air can be pushed through the fabric portion.

In some embodiments, the fixation portion is configured as a snap-in connector that automatically engages with the frame assembly upon pushing the same onto the frame assembly. The fixation portion may comprise an engaging portion configured to engage with or engage behind an inserted frame member. The engaging portion may be provided on a side portion of the recess in the fixation portion. The engaging portion may be movable between a locking position and an unlocking position. Inserting a frame member into the fixation portion, more precisely into the recess or another accommodating portion in the fixation portion, or out of the fixation portion is only possible when the engaging portion is in the unlocking position. The engaging portion may be elastically deformable such that inserting a frame member into the fixation portion and out of the fixation portion requires an elastic deformation of the engaging portion.

In some embodiments, the air supply arrangement is configured to be fluidly coupled to the bike trailer, for example to an inlet portion of the bike trailer such as an air permeable section. Fluidly coupled is to be understood in such a manner that the air supply arrangement is configured such that, once mounted on the bike trailer, it can supply air into the passenger compartment. Accordingly, a fluid coupling can already be established if some but not all of the air output by the air supply arrangement reaches an interior of the passenger compartment of the bike trailer.

In an embodiment, the air supply arrangement comprises an air guiding portion for directing pressurized air, for example from an air supply device supportable on the supporting portion, in the direction of the boundary defining the passenger compartment of the bike trailer. In some embodiments, the air guiding portion is integrally formed with the coupling arrangement. In some embodiments, the air guiding portion is integrally formed with the coupling arrangement and comprises a hood shape. In some embodiments, the coupling arrangement and the air guiding portion are formed as separate members connected to each other. In some embodiments, the air guiding portion may comprise a hood shape.

In some embodiments, the air guiding portion comprises at least one outlet opening facing towards the boundary of the passenger compartment of the bike carrier. In an embodiment, the air guiding portion comprises two outlet openings. The outlet openings may be arranged at a distance from each other and may be separated by a separation wall. The outlet openings may be arranged offset to each other in cross direction of the air supply arrangement. The cross direction of the air supply arrangement may correspond to a cross direction of the cross member of the bike trailer or to a cross direction of the bike trailer.

In some embodiments, the air guiding portion comprises an outlet passage for supplying air to the outlet opening. The outlet passage may connect a region of said air supply arrangement in which an outlet of the air supply device is supported with the outlet opening. In an embodiment, the air guiding portion comprises two outlet passages each configured to connect an outlet of the air supply device with an outlet opening. In an embodiment, the outlet passage or outlet passages extend outside of and at least partially along the boundary of the passenger compartment so that pressurized air is guided outside of the passenger compartment and along the boundary before an airflow direction of the pressurized air is directed towards the boundary of the passenger compartment. The boundary of the passenger compartment may be defined by a geometry of the frame assembly and/or may be defined by a covering portion or cover arrangement provided on the frame assembly. For example, the air guiding portion may be configured such that air, for example received by an air supply device on the supporting portion, is first directed in longitudinal forward direction of the air supply arrangement and, when the air supply arrangement is mounted on the bike trailer, in longitudinal forward direction of the bike trailer beyond a forward end of the roof portion and is then directed downwards at a position forward of the forward end portion of the roof portion. This allows to direct an airflow onto an air permeable section in a forward cover section of the bike trailer, for example a front mesh portion of a covering of the bike trailer and renders the air supply arrangement suitable for bike trailers that do not comprise an air permeable section, for example a mesh portion, in the roof portion.

In some embodiments, the air guiding portion is configured to direct the pressurized air towards an air permeable section of a cover arrangement of the bike trailer such that pressurized air penetrates the air permeable section. In some embodiments, the cover arrangement comprises a flexible sheet, for example having a fabric and/or a mesh. The air permeable section may be a section of the flexible sheet and may comprise a mesh. For example, the air permeable section may be provided in a front portion of the cover arrangement. The front portion of the cover arrangement is a portion which is located in front of a passenger in driving direction.

In an embodiment, the air guiding portion comprises a bike trailer contact portion. The bike trailer contact portion is configured to sealingly rest on the cover arrangement. The contact portion extends around the outlet opening. At least in sections, the contact portion may comprise an enlarged contact surface. The contact surface may be provided on a laterally protruding portion around the outlet opening. For example, a brim-like portion or a raised edge portion may be provided as laterally protruding portion around the outlet opening. The contact surface may extend in a direction cross to a flow direction of air in the outlet opening. In addition or alternatively, the contact surface may face in a direction of the flow direction of air.

In some embodiments, the air supply arrangement further comprises an air intake portion. The air intake portion comprises an intake opening and an intake passage connecting the intake opening with an inlet of the air supply device. The air intake portion may be provided on an upper side of the air supply device. In addition or alternatively, the intake opening can be configured and arranged to prevent rain from entering the intake opening. For example, the intake opening may be oriented in horizontal direction. In some embodiments, the intake opening is oriented in rearward direction or in downward direction, for example in vertical downward direction. In some configurations, the intake opening and the outlet opening extend in substantially parallel planes. In addition or alternatively, a cross-sectional area of the intake opening and a cross-sectional area of the outlet opening may extend parallel to each other. An airflow direction in the outlet opening and an airflow direction in the intake opening may be parallel but oppositely oriented.

In some embodiments, the air supply arrangement comprises a fixation portion for fixing a cover to the air supply arrangement in a manner such that an air intake and an air outlet of the air supply arrangement are provided on opposite sides of the cover. In some configurations, the fixation portion is configured to permanently retain the cover. In other configurations, the fixation portion is configured to detachably retain the cover. In some configurations, the fixation portion is configured to allow a tool-free mounting and dismounting of the cover. The fixation portion may be a dedicated portion specifically designed to allow a connection to the cover. The fixation portion may in other embodiments be provided by already existing parts cooperating with each other. For example, the fixation portion may be formed between portions of the intake portion and the air supply device that contact each other or between portions of the intake portion and the air guiding portion. The cover may be sandwiched or clamped between such portions.

In some embodiments, the cover is fixed to the fixation portion, for example clamped between the intake portion and the air guiding portion or the air supply device. In some configurations, the cover may be a rain cover. The cover may comprise a window portion configured to cover a front side of the passenger compartment. The cover may comprise fixation members for tightly fixing the cover to the bike trailer. The fixation members may comprise fixation loops. The fixation members may be configured to fix the cover to frame portions of the bike trailer. The frame portions may comprise elongate frame members or may comprise coupling portions between frame members such as joints. In some configurations, the frame portions are protruding portions that allow to hook the fixation loops thereon. At least one protruding portion may be provided as axial elongation in a direction along the pivot axis of a joint between elongate frame members.

In some embodiments, the air supply device comprises a fan. In some embodiments, the air supply device comprises an air filter. In some embodiments, the air supply device comprises a control unit. The control unit may be configured for controlling the speed of the fan and or for indicating the status of the air filter and/or the status of a power supply. The control unit may comprise pushbuttons for increasing and decreasing the fan speed and/or may comprise a push button for activating and deactivating the air supply device. Fan and air filter may be provided in an integral unit. Fan and filter may be provided in separate units that are mountable on the bike trailer in different areas.

Disclosed is also a bike trailer that comprises a frame assembly. The frame assembly defines boundaries of a passenger compartment. The bike trailer comprises a cover arrangement provided on the frame assembly and limiting the passenger compartment on at least one side. The cover arrangement may form a boundary of the passenger compartment. The bike trailer further comprises an air supply arrangement, for example one of the above-described air supply arrangements. The air supply arrangement is mounted to the frame assembly on an outside of the bike trailer, in particular outside of the boundary defining the passenger compartment.

In some configurations, the cover arrangement comprises an air permeable section. The air supply arrangement is provided on the cover arrangement such that pressurized air is applied on the air permeable section for penetrating the same.

In some embodiments, the air supply arrangement is placed on top of a roof portion of the bike trailer. For example, the air supply arrangement may be placed on top of a roof portion such that it at least partially rests on the cover arrangement. The air permeable section may be provided in the roof portion so that air may be supplied to the interior of the passenger compartment through the roof portion.

Disclosed is also an air guiding portion configured to be attached to or integrally formed with an air supply device and configured to direct pressurized air, for example received from the air supply device, to an air permeable section on a bike trailer forming a boundary of the passenger compartment. The air guiding portion may comprise a supporting portion or accommodating portion for receiving the air supply device. The air guiding portion may serve as an adapter for changing the direction of a flow of air from the air supply device to adapt the air supply device to a bike trailer. In this way, any air supply device may be adapted for use on a bike trailer. The guiding portion may thus be adapted to the bike trailer and to the air supply device. The air guiding portion may comprise one or more of the features as described in connection with the air guiding portion of the air supply arrangements described herein.

Other features of the present invention will be apparent from consideration of the information contained above as well as in or in combination with the following detailed description, drawings and claims and configurations given in itemized structure of aspects below. The present invention is illustrated by way of example, and not by way of limitation, in the figures of the accompanying drawings.

### BRIEF DESCRIPTION OF THE DRAWINGS

The accompanying drawings, which are incorporated herein and form part of the specification, illustrate possible configurations of embodiments and, together with the description, further serve to explain the principles of the embodiments and to enable a person skilled in the art to make and use the embodiments. It is noted that the same or similar parts in the different figures are denoted by the same reference signs.
Fig. 1 shows a perspective view on an air supply arrangement according to an embodiment.
Fig. 2 shows a perspective view from below on the air supply arrangement of Fig. 1.
Fig. 3 shows a side view of the air supply arrangement of Fig. 1.
Fig. 4 shows a view from below on the air supply arrangement of Fig. 1.
Fig. 5 shows a sectional view in longitudinal direction through the air supply arrangement of Fig. 1.
Fig. 6 shows a perspective view on a further embodiment of an air supply arrangement mounted on components of a bike trailer.
Fig. 7 shows an exploded view of components of the embodiment of Fig. 6.
Figs. 8 to 11 show a configuration of an air supply arrangement according to a further embodiment.
Fig. 12 shows the embodiment of Figs. 8 to 11 in a state in which it is mounted on components of a bike trailer.
Fig. 13 shows a perspective view on a further configuration according to another embodiment.
Fig. 14 shows a bike trailer with an air supply arrangement according to an embodiment.
Fig. 15 shows a bike trailer according to an embodiment.

All figures are only schematic depictions of exemplary embodiments in which, in particular, distances and dimensional correlations are not presented to scale.

The features and advantages of embodiments will become more apparent from the detailed description as given below when taken in conjunction with the drawings, in which like reference signs identify corresponding elements throughout. In the drawings like reference numbers generally indicate identical, functionally similar and/or structurally similar elements.

### DETAILED DESCRIPTION

The following detailed description is merely exemplary in nature and is not intended to limit application and uses. Furthermore, there is no intention to be bound by any theory presented in the preceding background or summary or the following detailed description.

Embodiments of the present disclosure are described in detail with reference to embodiments thereof as illustrated in the accompanying drawings. References to "one embodiment," "an embodiment," "some embodiments," etc., indicate that the embodiment(s) described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

Spatially relative terms, such as "beneath," "below," "lower," "above," "on," "upper," "opposite" and the like, may be used herein for ease of description to describe one element or feature's relationship to another element(s) or feature(s) as illustrated in the figures. The spatially relative terms are intended to encompass different orientations of the device in use or in operation in addition to the orientation depicted in the figures. The apparatus may be otherwise oriented (e.g., rotated 90 degrees or at other orientations) and the spatially relative descriptors used herein may likewise be interpreted accordingly.

Terms describing parts or members as "releasable" and/or "detachable" relate to configurations in which the parts or members are at least decouplable from another part or member without destroying one of the cooperating parts or members. These terms may also describe configurations in which the parts and members may be decoupled or disengaged without tools (tool-free). Terms describing parts or members as "positively locked" and/or "positively coupled" relate to configurations in which the parts or members are in positive engagement, positive mechanical engagement, interlocking contact.

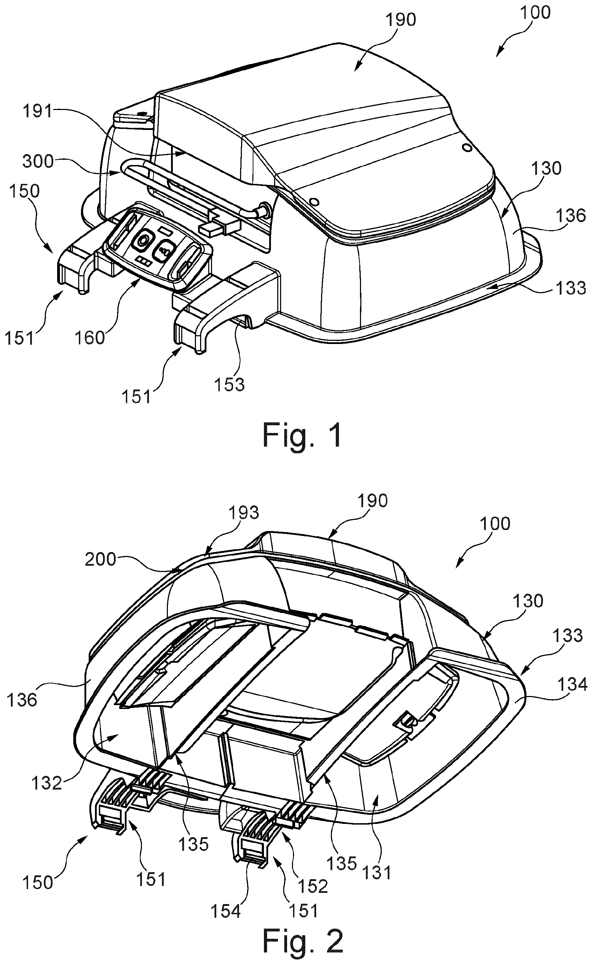

An embodiment of an air supply arrangement 100 will be described with reference to Figs. 1 to 5. The air supply arrangement 100 is configured to be used on a passenger transport carrier, for example on a bike trailer 1. The passenger transport carrier 1 is a device configured to carry a passenger from one place to another. The passenger can be, for example, a child, a disabled person, or an elderly person.

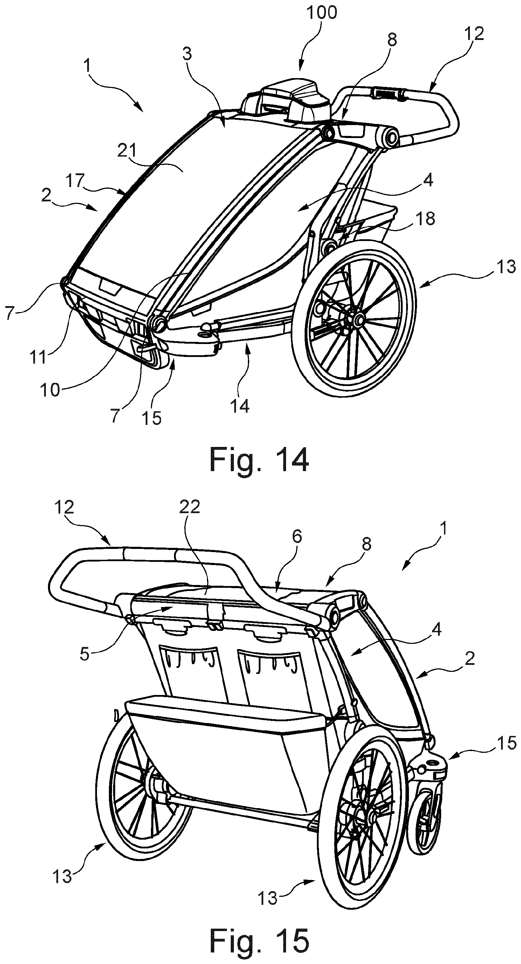

An embodiment of a bike trailer 1 is shown in Figs. 14 and 15. The bike trailer 1 is configured as a child transport carrier. The bike trailer 1 comprises a frame assembly 2 that defines a passenger compartment 4 configured to at least partially enclose a passenger. The bike trailer 1 comprises one or more wheels 13. The bike trailer 2 may be configured such that the wheels 13 can be selectively and releasably coupled to the bike carrier 1. The bike carrier can be configured to transport at least one passenger, for example, one, two, or three passengers. In the embodiment, the bike carrier 1 is configured to transport two children. At a forward lower end portion, the bike trailer 1 may comprise a coupling portion 15 configured to couple the bike trailer 1 to a bike. As shown in Fig. 16, the coupling portion 15 may be configured to detachably receive a front wheel.

The bike trailer 1 has a longitudinal axis that is generally parallel to the intended direction of travel of the bike trailer, a transverse axis that is generally perpendicular to longitudinal axis, and a vertical axis that is generally perpendicular to longitudinal axis and transverse axis. In this application, longitudinal and longitudinally, transverse and transversely, and vertical and vertically are relative to the longitudinal axis, the transverse axis, and the vertical axis, respectively.

The bike trailer 1 comprises a frame assembly 2 that provides structural support for the bike trailer 1. Figs. 14 and 15 illustrate a frame assembly 2 according to an embodiment. The frame assembly 2 defines a passenger compartment 4 for containing a passenger. In the embodiment, the frame assembly surrounds the compartment 4. This provides additional protection to a child seated within compartment 4.

The frame assembly 2 comprises a lower frame portion 14 that defines a lower boundary of passenger compartment 4, an upper frame portion 8 that defines an upper boundary of passenger compartment 4, a forward frame portion 17 that defines a forward boundary of passenger compartment 4, and a rear frame portion that defines a rear boundary of passenger compartment 4. Although in the embodiment, the lower frame portion 14, the upper frame portion 8, the forward frame portion 17, and the rear frame portion 18 are easily definable and discrete portions of frame assembly 2, two or more of the frame portions can be continuous.

The lower frame portion 14 includes one or more frame members made of any suitable material, for example, metal, plastic, composite, or any other suitable material. In the embodiment, the lower frame portion 14 includes at least two spaced apart elongate lower frame members, a left elongate lower frame member and a right elongate lower frame member. The lower frame members extend longitudinally across frame assembly 2 and, in some embodiments, are parallel to the longitudinal axis of the bike trailer 1. The lower frame members each have a forward end portion and a rear end portion. The lower frame portion 14 also includes a forward lower frame member 11 that extends transversely across lower frame portion 14 and is fixedly coupled to the forward end portions of the longitudinal lower frame members. The lower frame portion 14 may also include rear lower frame member that extends transversely across the lower frame portion 14 and can be fixedly coupled to the rear end portions of the longitudinal lower frame members. In some embodiments, the lower frame portion 14 is rectangular when viewed from above in the vertical direction.

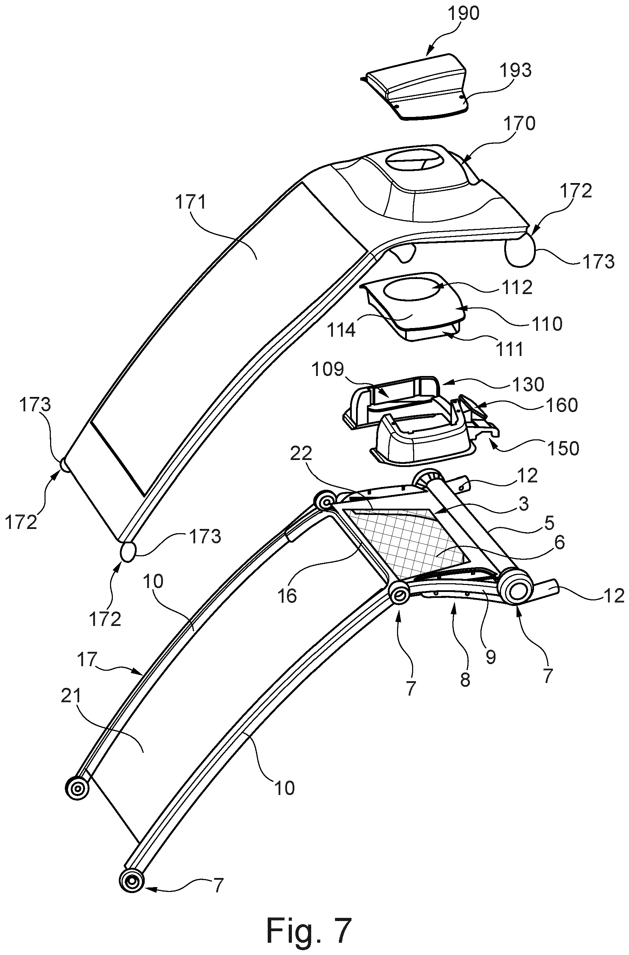

The upper frame portion 8 is positioned above the lower frame portion 14. The upper frame portion 8 comprises one or more frame members made of any suitable material, for example, metal, plastic, and composite. In the embodiment, the upper frame portion 8 comprises two transversely spaced apart elongate upper frame members 9. For example, the upper frame portion 8 comprises a left upper frame member on a left side of the upper frame portion 8 and frame assembly 2, and a right upper frame member on the right side of the upper frame portion 8 and frame assembly 2. The upper frame members 9 extend longitudinally across the upper frame portion 8 and, in some embodiments, are parallel to the longitudinal axis of the bike trailer. The upper frame members each have a forward end portion and a rear end portion. The upper frame portion 8 may comprise a forward upper frame member 16 that extends transversely across the upper frame portion 8 and is coupled to the forward end portions of the longitudinal upper frame members 9. The upper frame portion 8 also comprises rear frame member 5 that extends transversely across upper frame portion 8 and is fixedly coupled to the rear end portions of longitudinal upper frame members 9 as best seen in Figs. 7, 10 and 14. In some embodiments, upper frame portion 8 is rectangular when viewed from above in the vertical direction.

The forward frame portion 17 extends between the lower frame portion 14 and the upper frame portion 8. The forward frame portion 17 includes one or more members made of any suitable material, for example, metal, plastic, or composite. The forward frame portion comprises at least two transversely spaced apart elongate forward frame members 10. In the embodiment, the forward frame portion includes a left forward frame member on a left side of the forward frame portion and the frame assembly 2, and a right forward frame member on the right side of the forward frame portion and the frame assembly 2. The forward frame members extend in the vertical direction from the lower frame portion 14 to the upper frame portion 8 and, in some embodiments (not shown), are parallel to vertical axis. The forward frame members 10 each have a lower end portion and an upper end portion. The lower end portions are coupled, for example, fixedly or rotatably, to forward end portions of the longitudinal lower frame members of the lower frame portion 14. The upper end portions are coupled, for example, fixedly or rotatably, to the forward end portions of the upper frame members 9 of the upper frame portion 8. In some embodiments as shown, forward frame members 10 can be arcuate when viewed from the side.

In some embodiments, a frame member forming a portion of the lower frame portion 14, the upper frame portion 8, the forward frame portion, or the rear frame portion can be the same member forming a portion of the other frame portions. For example, the forward frame member 10 and the longitudinal upper frame member 9 can be formed by the same frame member. Forward upper frame member 16 may be coupled to upper end portions of the forward frame members 10.

In some embodiments, the frame assembly 2 also includes a handle 12 configured to be pushed or manipulated by a user to move the bike trailer 1 in the direction of travel. The handle 12 comprises end portions coupled, rotatably or fixedly, to the rear ends of the upper frame members 9 of the upper frame portion 8 in some embodiments. The handle 12 can be substantially U-shaped.

The bike trailer 1 includes a cover arrangement 3 coupled to frame assembly 4. The cover arrangement 3 shields a passenger that is seated in the compartment 4 from environmental elements, for example, sun, wind, rain, noise, or any other environmental element. In some embodiments, the cover arrangement 3 completely surrounds the compartment 4 to form a substantially enclosed passenger cabin. In some embodiments, the cover arrangement 3 comprises one or more openable sections, for example at the front, sides, or top of the compartment 4. The cover arrangement 3 may comprise an air permeable section 6, for example a fly screen or mesh. The air permeable section 6 may be provided at the front. In some configurations, the cover arrangement 3 comprises an air permeable section 6 at the top. In some configurations, the cover arrangement 3 comprises an air permeable section 6 at the top and at the front.

The cover arrangement 3 is supported on the frame assembly 2. In the embodiment, a forward cover section 21 of the cover arrangement 3 is supported on the forward frame portion 17 and an upper cover section 22 of the cover arrangement 3 is supported on the upper frame portion 8. The upper frame portion 8 together with the upper cover section 22 may define a roof portion of the bike trailer 1. The forward cover section 21 and/or the upper cover section 22 comprise an air permeable section 6, for example embodied as a fly screen or other type of mesh. At least the forward cover section 21 may be openable and closable by a user to grant access to the passenger compartment 4.

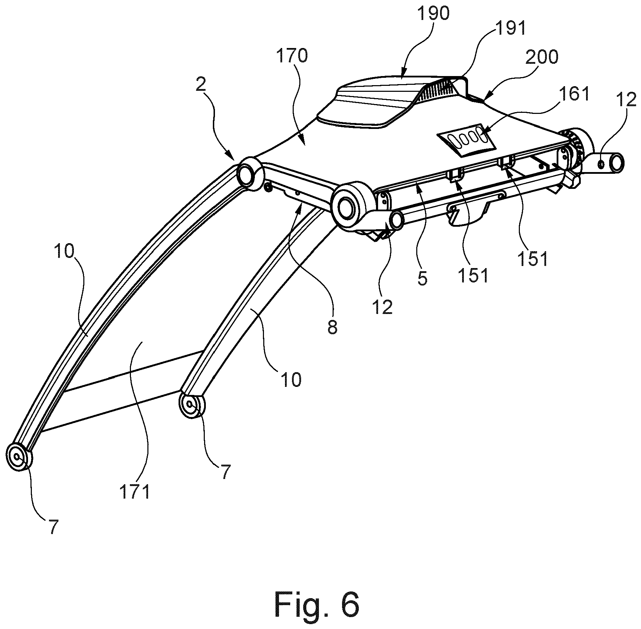

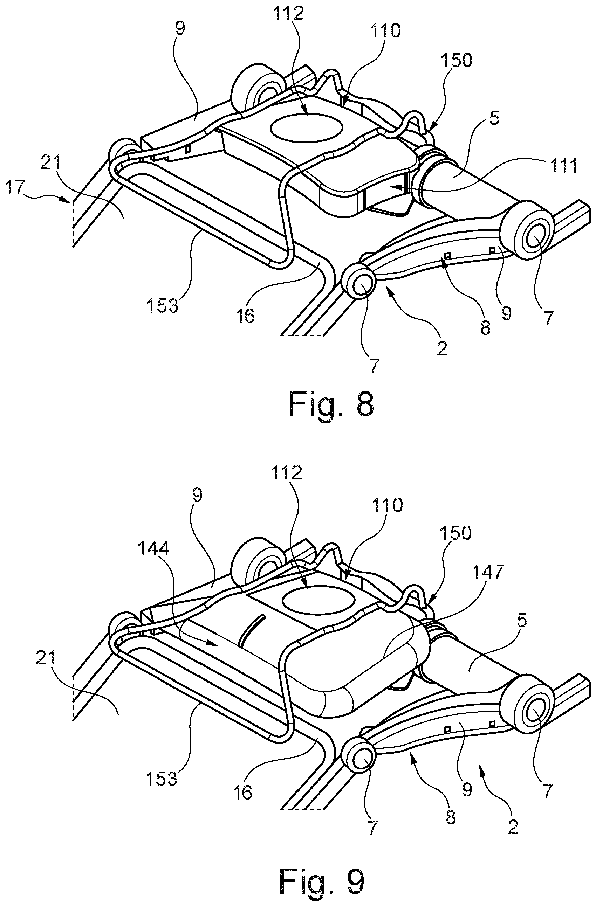

In all embodiments, the air supply arrangement 100 is configured mountable on an outside of the bike trailer 1 and configured to direct pressurized air onto an air permeable section 6. In the shown embodiments, the air supply arrangement 100 is configured to be mounted on top of the bike trailer 1 with the air supply arrangement 100 arranged on the upper frame portion 8. In some configurations, the upper cover section of the bike trailer 1 comprises an air permeable section 6 (see embodiments in Figs. 6, 7, 14 and 15). In some configurations, the forward cover section comprises an air permeable section and the air supply arrangement is configured to direct air to the air permeable section in the forward cover section (see for example the embodiment in Figs. 8 to 15).

In some embodiments, the air supply arrangement 100 may be coupled to the rear frame member 5 of the upper frame portion 8. Furthermore, the air supply arrangement 100 contacts the upper cover section and/or rests on the upper cover section such that pressurized air is directed towards the air permeable section 6 in the upper cover section. In other embodiments, the air supply arrangement 100 is configured to direct air to an air permeable section in the forward cover section of the bike carrier. In operation, the air supply arrangement 100 pushes air through the air permeable section 6 into the compartment 4.

According to the embodiments, the air supply arrangement 100 comprises a supporting portion 109 for supporting an air supply device 110, an air guiding portion 130, 140 and a coupling arrangement 150. Optionally, the air supply arrangement may comprise an air intake portion 190.

An example of an air supply device 110 comprises an inlet 112 and an outlet 111. In the embodiments shown in the drawings, the air supply device 110 comprises a single inlet 112 and two outlets 111 spaced from each other in lateral direction from the inlet 112. The outlets 111 are arranged on opposite sides of the inlet 112 and may be oriented away from each other. The inlet 112 may extend in a first direction, for example a vertical direction. Air flowing through the inlet 112 flows in the first direction. The inlet 112 may be provided in an upper portion of a housing of the air supply device 110. Each outlet 111 may extend in a second direction at an angle with respect to the first direction. Air introduced through the inlet 112 is directed radially outwards to the outlets 111. With respect to an imaginary plane, the inlet extension direction or inlet airflow direction may be perpendicular to such plane and the outlet extension direction or outlet airflow may be angled to that plane. The air supply device 110 is configured such that air enters through the inlet and exits via two outlets. Accordingly, intake air having passed the inlet is divided and supplied to the two outlets. The air supply device comprises two airflow passages connecting the inlet 112 with the outlets 111. The passages may be arranged in Y-shaped configuration. The airflow passages and/or directions may be symmetrical to a center plane extending in longitudinal direction of the air supply device 110. For example, air may be drawn into the air supply device 110 in vertical downward direction from above and may be laterally output in downward direction, for example at an angle to the vertical downward direction.

The air supply device 110 comprises a fan for pressurizing intake air. The fan may be provided centrally below the inlet 112. The air supply device 110 may further comprise air filter receiving sections for receiving an air filter. Each air filter receiving section may be provided downstream of the fan, for example near an outlet 111. The air filter receiving sections may be accessible from below, i.e. from a side opposite to the side where the inlet 112 is provided, for example via openable housing sections or doors or flaps 113.

The air supply device 110 is received in or coupled to an air guiding portion 130, 140 at the supporting portion 109. The air guiding portion 130, 140 is configured to direct pressurized air from the air supply device 110 in the direction of the boundary of the passenger compartment 3 of the bike trailer 1. Furthermore, the air guiding portion 130, 140 is configured to guide air to a position of an air permeable section 6 of the bike trailer 1.

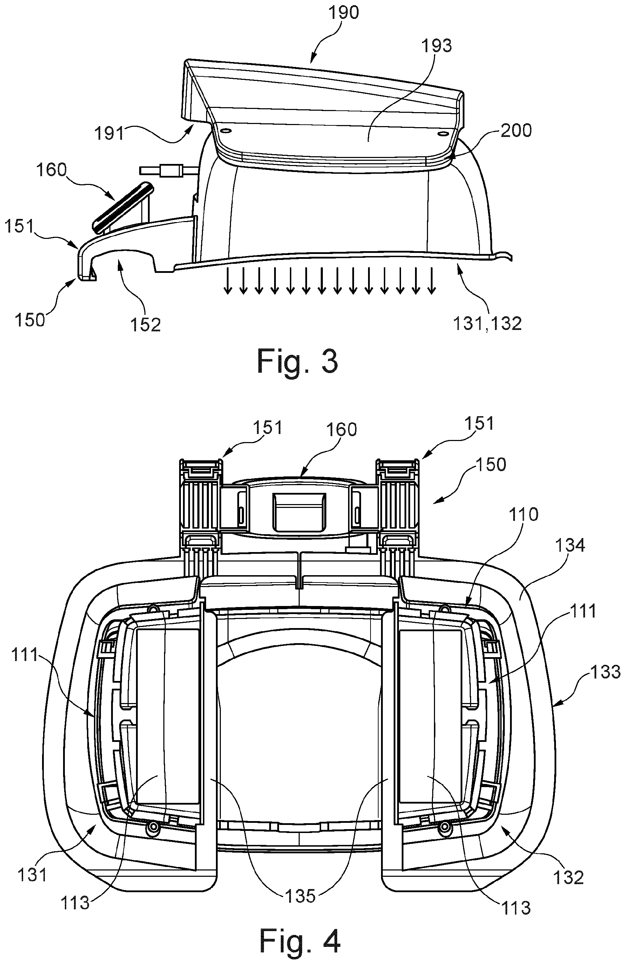

In an embodiment, the air guiding portion 130 comprises a housing 136. The housing 136 comprises or defines two outlet passages each connecting an outlet 111 of the air supply device 110 with a respective outlet opening 131, 132 on a lower portion when the air supply device 110 is accommodated in or coupled to the housing 136 as seen in Fig. 4. The housing may comprise a receiving portion or supporting portion 109 in the upper portion. The receiving portion is configured to fluidly connect the air supply device 110 with the outlet passages. The outlet openings 131, 132 are assigned to the outlets 111 when the air supply device 110 is mounted on the air guiding portion 130. Accordingly, air that is output through the outlets 111 flows to the outlet openings 131, 132 through the outlet passages. The air guiding portion 130 comprises a bike trailer contact portion 133 which is configured to contact a cover arrangement 3 of the bike trailer 1.

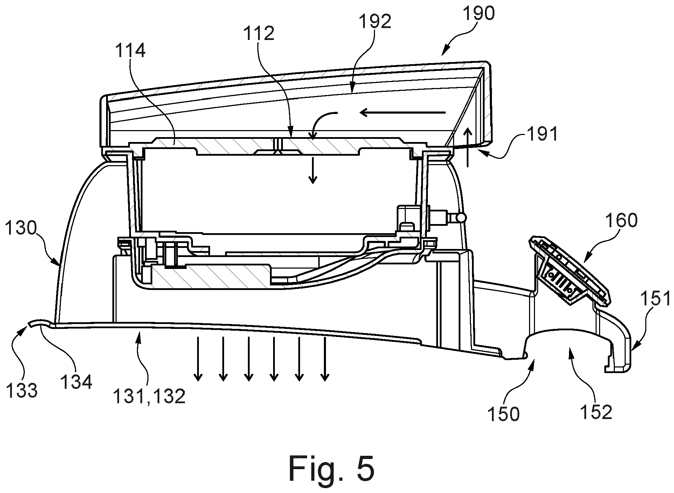

The bike trailer contact portion 133 can be configured to get in air transferable and/or sealing contact with the cover arrangement. The bike trailer contact portion 133 may thus be configured to be able to sealingly rest on the cover arrangement 3. The contact portion 133 extends around each outlet opening 131, 132. At least in sections, the contact portion 133 may be configured to prevent air from passing between contact portion 133 and cover arrangement 3 or at least limit the amount of air that may pass between the contact portion 133 and the cover arrangement 3. The contact portion 133 may be adapted to the shape of the cover arrangement 3 such that large gaps between contact portion 133 and cover arrangement are prevented. The contact portion 133 may comprise a sealing arrangement. For example, the contact portion 133 may comprise a sealing lip or strip extending along the contact portion 133. The sealing arrangement may comprise a padding, for example comprising a foam material. The contact portion 133 may at least in sections comprise an enlarged contact surface 134. With such an enlarged contact surface 134, a contact area of the contact portion 133 on the cover arrangement 3 is enlarged. As best seen in Figs. 4 and 5, the contact surface 134 may be provided on a laterally protruding portion around the outlet opening 131, 132. The contact surface 134 may be provided on a brim-like portion of the guiding portion 130 or a raised edge portion. The contact surface extends in a direction cross to the flow direction of air in the outlet opening 131, 132. The contact surface is larger than the width of an adjacent wall portion of the housing 136 that limits the outlet passage. The outlet openings 131, 132 may be arranged at a distance from each other and may be separated by one or more separation walls 135. In the shown configuration, each outlet opening 131, 132 and each outlet passage is limited by a laterally inner separation wall 135. The separation walls are arranged at a distance from each other. An access space is provided between the separation walls 135. The access space is configured to allow a user to access a bottom middle portion of the air supply device 110, for example for the purpose of changing an accumulator. The above-mentioned air filter receiving sections and openable housing sections may be accessible from below through the outlet passages as seen in Fig. 4.

In some embodiments, the air supply arrangement 100 comprises a coupling arrangement 150. The coupling arrangement 150 is configured for attaching the air supply device 110 on an outside of the bike trailer 1. The coupling arrangement comprises at least one fixation portion 151. In some embodiments, the coupling arrangement 150 comprises two fixation portions 151 as for example seen in Figs. 1 to 5.

The coupling arrangement 150 is configured to support the air supply device 110 on the frame assembly 2. In the embodiment, the coupling arrangement 150 is configured to attach to the rear frame member 5 of the upper frame portion 8. Two fixation portions 151 are provided on the same side of the air supply device 110 on the guiding portion 130. However, in other embodiments, the coupling arrangement 150 may be configured to attach to other frame members of the roof portion, such as lateral frame members extending in longitudinal direction of the bike carrier. In this case, the coupling arrangement 150 may comprise fixation portions on opposite lateral sides thereof.

Each fixation portion 151 can be configured as a snap-in connector that automatically engages with the frame assembly 2 upon pushing the same onto the frame assembly 2. Each fixation portion may comprise a claw-like structure. Each fixation portion comprises a recess 152 for receiving a portion of the frame assembly 2, for example a portion of the cross member 5. Each fixation portion 151 may comprise an engaging portion configured to engage with or engage behind an inserted frame member, for example with an inserted cross member such as the rear frame member 5. The engaging portion may be provided on a side portion of the recess 152. The engaging portion may be movable between a locking position and an unlocking position. The engaging portion may be biased towards the locking position. The engaging portion may be elastically deformable such that inserting the frame member into the fixation portion and out of the fixation portion requires an elastic the formation of the engaging portion. In some configurations, the fixation portions 151 are shaped such that they can be hooked on a portion of a frame assembly which is non-round in cross section, for example in a rotate-to-lock manner. The fixation portions 151 may comprise U-shaped free end portions 154. The U-shaped free end portions may be configured such that the open side of the U-shape is oriented towards the air guiding portion 130 and/or towards an interior of the recess 152. In other words, the recess may be L-shaped.

In other embodiments, the engaging portion may comprise a blocking member configured to be movable between a closed position in which the lever at least partially closes an access opening of the recess 152 and an opened position in which the fixation portion 151 can be put on or detached from the frame assembly 2. In further embodiments, the engaging portion is a movable clamping member configured to clamp a portion of the frame assembly 2 on the fixation portion 151.

In the embodiment, the coupling arrangement 150 is configured such that the air supply arrangement 110 and the air guiding portion 130 are mountable on the frame member in a cantilevered manner, in particular such that the air supply arrangement 110 and the guiding portion 130 are positioned on one side of a frame member, for example forward of the rear frame member 5.

In another embodiment shown in Figs. 8 to 13, the air guiding portion 140 comprises an outlet passage 144 connecting an outlet 111 of the air supply device 110 with an outlet opening 145. The outlet passage 144 extends outside of and along an upper boundary of the passenger compartment 4, more precisely along the upper cover section, so that pressurized air is guided outside of the passenger compartment 4 and along the upper cover section before an airflow direction of the pressurized air is changed and directed towards the forward cover section which comprises an air permeable section. In this embodiment, the air supply device 110 is again fixedly mounted on the cross member 5 of the frame assembly 2 by means of a coupling portion 150 and positioned above the upper cover section. Contrary to the configuration as described before, air is not directed to the upper cover section but to an air permeable section in the forward cover section.

The outlet passage 144 comprises an inner enclosure portion 147 that may be provided around the air supply device 110. The inner enclosure portion 147 may be made of a dimensionally stable material defining at least a portion of the outlet passage 144. The enclosure portion 147 may be made from a synthetic material, for example a thermoplastic resin such as polyethylene. The enclosure portion 147 is formed to create a tunnel or channel directing air output from the outlets 111 of the air supply device 110 in longitudinal forward direction and along the upper boundary of the passenger compartment 4. The enclosure portion may be configured to join both air streams to a single air stream as in the configuration of Fig. 9 or may provide a separate passage for each outlet 111.

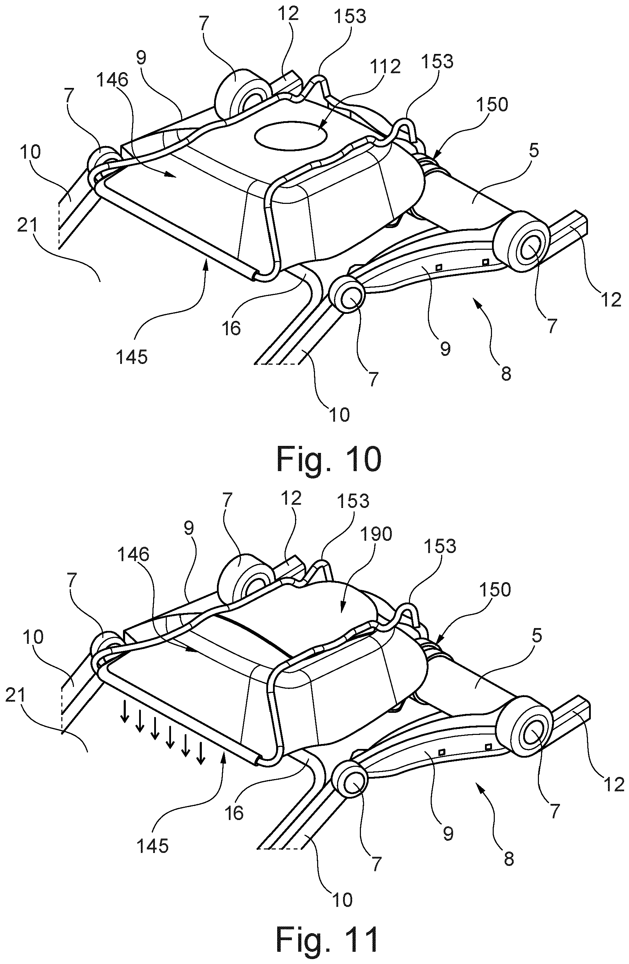

A supporting bracket 153 extends from the coupling portion 150 over the air supply device 110 and beyond the air supply device 110 such that a forward end portion of the supporting bracket is arranged at a distance from the air supply device 110 in longitudinal forward direction and at a position at which the forward end is arranged above the air permeable section in the forward cover section. An outer enclosure 146 may be applied around the air supply device 110 and/or the inner enclosure 147. The outer enclosure may be made of a flexible material, for example from a fabric. The outer enclosure is configured to direct air flowing out of the inner enclosure towards the air permeable section in the forward cover section of the bike trailer 1. A forward end portion of the outer enclosure defines an outlet opening. The forward end portion may be supported on the forward end portion of the supporting bracket 153 as seen in Figs. 10 and 11.

An intake portion 190 is coupled to air supply device 110 on an inlet side of the air supply device 110. The intake portion 190 is configured to at least partially define an air intake opening 191 and to at least partially define an air intake passage 192 connecting the intake opening 191 with the inlet 112 of the air supply device 110. The intake portion 190 may be made from a rigid material and is in the embodiments a cover portion fixable to an upper side of the air supply device 110.

The intake portion 190 is configured and arranged to prevent rain from entering the intake opening 191. In some embodiments, the intake opening 191 is oriented in horizontal direction. In some embodiments, the intake opening 191 is oriented in rearward direction. In some embodiments, the intake opening 191 is oriented in downward direction, for example in vertical downward direction as seen in Fig. 5. In such a configuration, air is drawn into the intake portion 190 from below. The intake portion 190 may be configured and arranged on the air supply device 110 such that a rear portion of the intake portion 190 extends beyond the air supply deice 110 and protrudes from the same in rearward direction. A protruding portion of the intake portion 190 and the coupling arrangement 150 can be provided on the same side of the air supply device 110 and of the air guiding portion 130 as seen in Fig. 5. In some embodiments, the intake portion 190 may be a cover comprising a trough like shape and having an opening on one side. The cover may be coupled to the inlet side of the air supply unit 110 such that an upper portion of the air supply device 110 partially closes the opening defined in the cover and only a portion of the opening is left unobstructed. The unobstructed part of the opening forms the intake opening 191. A side wall defining the opening is positioned offset to the upper portion of the air supply device 110.

In some embodiments, the intake opening 191 and the inlet 112 can extend in substantially parallel planes. In addition, or alternatively, in some embodiments, the intake opening 191 and the outlet openings 131, 132 can extend in substantially parallel planes. A cross-sectional area of the intake opening 191 and a cross-sectional area of the outlet opening 131, 132 can extend substantially parallel to each other. In some embodiments, an airflow direction in the inlet 112 and an airflow direction in the intake opening 191 are parallel but oppositely oriented. In some embodiments, an airflow direction in the outlet opening 131, 132 and an airflow direction in the intake opening 191 are parallel but oppositely oriented.

In some embodiments, the air supply arrangement comprises a cover 170 as best seen in Fig. 7. The cover 170 is configured to cover an upper portion and a forward portion of the bike carrier 1. The cover 170 may therefore comprise a forward cover portion 171 for covering a forward cover section 21 of the bike trailer 1 and a rear cover portion 174 for covering an upper cover section 22 of the bike trailer 1. The forward cover portion 171 may comprise a transparent window section. The cover 170 may be configured waterproof.

The cover 170 may be fixedly coupled to the air supply device 110. In other embodiments, the cover may be detachably provided on the air supply device 110. In the embodiment of Fig. 7, the cover is clamped between a fixation portion 193 of the intake portion 190 and a fixation portion 114 of the air supply device 110. In this configuration, these portions jointly form a fixation portion 200 for the cover 170 in the air supply arrangement 100. The intake portion 190 may be attached to the air supply device by means of fastening members, for example screws. Accordingly, the cover 170 is an integral member of the air supply arrangement 100.

The cover 170 comprises an opening configured to be aligned with the inlet 112 of the air supply device 110 such that the inlet remains unobstructed or uncovered when the cover 170 is attached. The cover 170 may comprise a rectangular shape.

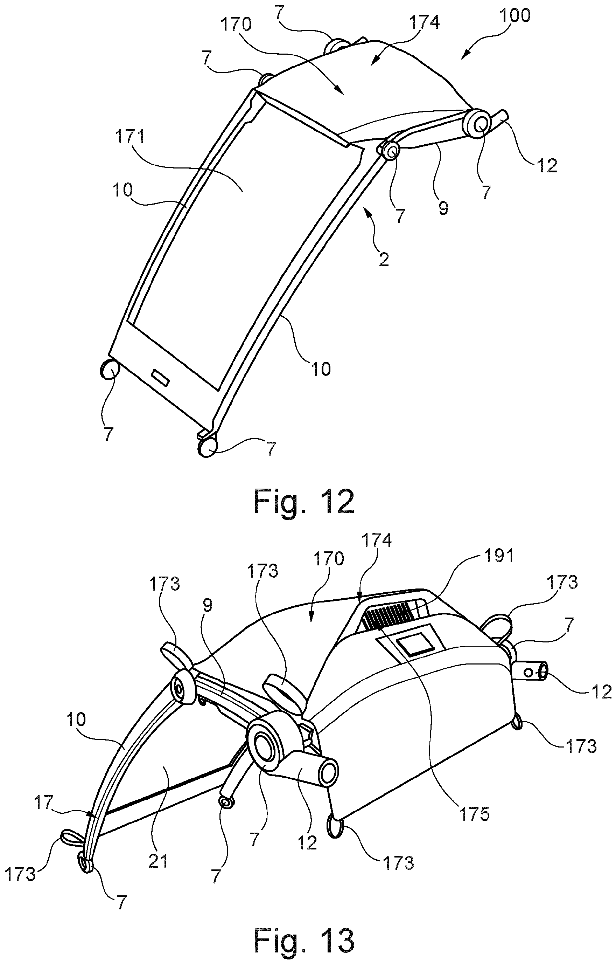

The air intake and an air outlet of the air supply arrangement 100 are in such configuration provided on opposite sides of the cover 170. In other configurations, the rear cover portion 174 may conceal the intake portion 190 and rest on the same as seen in Fig. 13. The rear cover portion 174 may then comprise an air permeable section or opening 175 at a position of the intake opening 191.

In a modification, the intake portion 190 may be omitted and may instead be formed by the rear cover portion 174. More precisely, in the configuration of Fig. 10, the supporting bracket 153 may be configured to support the rear cover portion 174 at a distance from the upper portion of the air supply device 100 to provide a space between the rear cover portion 174 and the inlet 112 though which air may be drawn in. The rear cover portion 174 may comprise the opening 175 at a rearward facing and/or downward facing portion of the rear cover portion 174.

The cover 170 may comprise fixation members 172 for tightly fixing the cover 170 to the bike trailer 1. The fixation members may comprise fixation loops 173. The fixation loops may be provided in corner portions of the cover 170 and optionally at specific positions on lateral portions of the cover, for example at positions at which joints or hinges are provided on the frame assembly 2 of the bike trailer 1 to which the cover 170 is mountable. The frame assembly may comprise protrusions 7 configured to allow a user to hook the fixation loops 173 thereon for fixing the cover 170 to the frame assembly 2. The protrusions 7 may be provided at or may be portions of hinges or joints of the frame assembly.

The air supply arrangement 100 may further comprise a control unit 160. The control unit 160 can be fixedly arranged and supported between the fixation portions 151. However, in principle, the control unit 160 can be arranged at other portions of the air supply arrangement 100, for example on the intake portion 190. The control unit can be connected to the air supply device 110 by means of a cable 300 as shown in Fig. 1. The control unit 160 may be configured for controlling the speed of the fan and or for indicating the status of the air filter and/or the status of a power supply. The control unit 160 may comprise pushbuttons for increasing and decreasing the fan speed and/or may comprise a push button for activating and deactivating the air supply device. The control unit 160 may be covered by a window portion 161 of the cover 170.

While in the above description the air supply arrangement is often described with reference to and in connection with a bike trailer, it is noted that the air supply arrangement may be suitable used on other passenger transport carriers and is not limited to the use with bike trailers.

In conclusion a, it is pointed out that the terms like "comprising" or the like are not intended to rule out the provision of additional elements or steps. In addition, features described in conjunction with the different embodiments can be combined with each other however desired. It is also noted that the reference numbers in the claims are not to be construed as limiting the scope of the claims. Moreover, while at least one exemplary embodiment has been presented in the foregoing summary and detailed description, it should be appreciated that a vast number of variations exist.

It should also be appreciated that the exemplary embodiment or exemplary embodiments are only examples, and are not intended to limit the scope, applicability, or configuration in any way. Rather, the foregoing summary and detailed description will provide those skilled in the art with a convenient roadmap for implementing an exemplary embodiment, it being understood that various changes may be made in the function and arrangement of elements described in an exemplary embodiment without departing from the scope as set forth in the appended claims.

## Claims

1. Air supply arrangement (100) for a bike trailer (1), said air supply arrangement (100) being configured to be provided outside of a boundary defining a compartment of said bike trailer (1), and comprising,
a supporting portion (109) for supporting an air supply device (110) configured to pressurize intake air, and
a coupling arrangement (150) for attaching said supporting portion (109) on an outside of said bike trailer (1).

2. Air supply arrangement (100) according to claim 1, wherein said coupling arrangement (150) comprises a fixation portion (151) configured to attach to a frame assembly (2) of said bike trailer (1), for example to a cross member (5) of said bike carrier (1).

3. Air supply arrangement (100) according to claim 2, wherein said fixation portion (151) is configured as a snap-in connector that automatically engages with said frame assembly (2) upon pushing the same onto said frame assembly (2) and/or wherein said fixation portion (151) may comprise a hook configuration.

4. Air supply arrangement (100) according to one of the preceding claims, further comprising a bike trailer contact portion (133) configured for sealingly resting on a cover arrangement (4) of said bike trailer (1), wherein said contact portion (133) extends around an outlet opening (131, 132) and may at least in sections comprise an enlarged contact surface, wherein said contact surface (134) is provided on a laterally protruding portion around said outlet opening (131, 132), for example on a brim-like portion or a raised edge portion, wherein said contact surface (134) extends in a direction cross to a flow direction of air in said outlet opening (131, 132) and/or faces in a direction of said flow direction of air.

5. Air supply arrangement (100) according to one of the preceding claims, further comprising an air intake portion (190) with an intake opening (191) and an intake passage (192) connecting said intake opening (191) with an inlet (112) of said air supply device (110), wherein said air intake portion (190) is provided on an upper side of said air supply device (110) and/or wherein said intake opening (191) is configured and arranged to prevent rain from entering said intake opening (191), for example oriented in horizontal direction, optionally in rearward direction, or in downward direction, for example in vertical downward direction and/or for example such that said intake opening (191) and said outlet opening (131, 132) extend in substantially parallel planes and/or a cross-sectional area of said intake opening (191) and a cross-sectional area of said outlet opening (131, 132) extend parallel to each other and/or an airflow direction in said outlet opening (131, 132) and an airflow direction in said intake opening (191) are parallel but oppositely oriented.

6. Air supply arrangement (100) according to one of the preceding claims, further comprising a fixation portion (200) for fixing a cover (170) to said air supply arrangement (100) in a manner such that an air intake and an air outlet of said air supply arrangement (100) are provided on opposite sides of said cover (170), wherein said fixation portion (200) is configured to permanently retain said cover (170) or to detachably and optionally tool-free mount said cover (170).

7. Air supply arrangement (100) according to claim 6, further comprising said cover (170) fixed to said fixation portion (200), wherein said cover (170) may be a rain cover and/or may comprise a window portion (171) configured to cover a front side of said passenger compartment (4) and/or wherein said cover (170) comprises fixation members (172), for example fixation loops (173), for tightly fixing said cover (170) to said bike trailer (1), for example to frame portions (7) of said bike trailer (1) such as protrusions and/or joints.

8. Bike trailer (1) comprising
a frame assembly (2) defining boundaries of a passenger compartment (4),
a cover arrangement (3) provided on said frame assembly (2) and limiting said passenger compartment (4) on at least one side, and
the air supply arrangement (100) according to one of the preceding claims mounted to said frame assembly (2) on an outside of said bike trailer (1).

9. Bike trailer (1) according to claim 8, wherein said cover arrangement (3) comprises an air permeable section (6) and wherein said air supply arrangement (100) is provided on said cover arrangement (3) such that pressurized air is applied on said air permeable section (6) for penetrating the same.

10. Bike trailer (1) according to claim 9, wherein said air supply arrangement (100) is placed on top of a roof portion (8) of said bike trailer (1), for example such that it at least partially rests on the cover arrangement (3), wherein said air permeable section (6) may be provided in said roof portion (8) so that air may be supplied to the interior of the passenger compartment (4) through the roof portion (8).
